# EUROPÄISCHE PATENTSCHRIFT

(11) **EP 0 604 360 B1**
(45) Veröffentlichungstag und Bekanntmachung des Hinweises auf die Patenterteilung: **16.04.1997**
(21) Anmeldenummer: 93810795.0
(22) Anmeldetag: 16.11.1993
(51) Int. Cl.: C02F 1/78, C02F 9/00

(54) **Verfahren zur kontrollierten Abführung von unlöslichen und schwerlöslichen Stoffen aus einem System, in dem ozontes Wasser zirkuliert**
Process for the controlled removal of insoluble or slightly soluble substances from a system wherein ozonized water is circulating
Procédé d'évacuation controlée de matières insolubles ou difficilment solubles d'un système dans lequel circule de l'eau ozonisée

(30) Priorität: 14.12.1992 CH 3807/92
(43) Veröffentlichungstag der Anmeldung: 29.06.1994
(73) Patentinhaber: Christ AG, CH-4147 Aesch (CH)
(72) Erfinder: Meuli, Kurt, CH-4402 Frenkendorf (CH)
(74) Vertreter: Becher, Pauline, Dr.

(56) Entgegenhaltungen:
- EP-A- 0 286 870
- WO-A-91/12209
- CA-A- 1 042 572
- GB-A- 1 419 537
- NTIS TECH NOTES 1990 , SPRINGFIELD, VA US Seite 985 'Ozone Treatment for Cooling Towers'

## Beschreibung

Die Erfindung betrifft ein Verfahren zur kontrollierten Abführung (Ausscheidung) von unlöslichen und schwerlöslichen Stoffen aus einem ozontes Wasser führenden System, das im Patentanspruch 1 definiert ist. Dabei handelt es sich um die Behandlung von Wasser, das in teilweise zur Atmosphäre hin offenen, aquatischen Systemen zirkuliert. Die dafür auch verwendete Bezeichnung "geschlossene Systeme" ist in diesem Zusammenhang verwirrend und nicht korrekt. Sie wird genauer durch den Begriff "Systeme mit gefangenem Wasser" ersetzt. Beispiele solcher Systeme sind Schwimmbäder, Zierteiche, Luftwaschsysteme und insbesondere Kühlsysteme mit offenem Kühlturm. Kennzeichnend für diese Systeme ist, dass daraus Wasser verdampft oder verdunstet und das zurückbleibende Wasser sich dabei eindickt. Verdampfung und Verdunstung werden im folgenden als synonyme Begriffe verwendet. Mit zunehmender Eindickung steigen die Konzentrationen der im Wasser enthaltenen Fremdstoffe. Gelöste Wasserinhaltsstoffe, die dabei unlöslich werden, fallen aus und bilden an den Innenflächen des aquatischen Systems Beläge, die die Durchströmung des Systems und in Kühlanlagen den Wärmeübergang behindern. Um dies zu verhindern, wird die Eindickung begrenzt, indem dem System mehr Wasser zugesetzt wird, als durch Verdunstung aus dem System entweicht, und das überschüssige Wasser aus dem System abgezogen wird. Wenn beispielsweise innerhalb einer bestimmten Zeitspanne dem System doppelt soviel Wasser zugesetzt wird, wie daraus verdunstet, das heisst, von dem Zusatzwasser eine Hälfte verdunstet und die andere Hälfte abgeschlämmt wird, enthält das Abschlämmwasser praktisch alle mit dem Zusatzwasser eingebrachten Wasserinhaltsstoffe. Die Konzentration aller Wasserinhaltsstoffe ist dann im Abwasser doppelt so hoch wie im Zusatzwasser, und das Abwasser hat zwangsläufig dieselbe Zusammensetzung wie das Wasser des Systems, aus dem das Abwasser abläuft. Man spricht in diesem Falle von einer zweifachen Eindickung.

Natürliches Wasser und auch Wasser, welches durch Trinkwasserversorgungsunternehmen verteilt wird, befindet sich im oder nahe am sogenannten Kalk-Kohlensäure-Gleichgewicht. Aus solchem Wasser scheidet sich schon nach geringer Eindickung Kalk aus, so dass Kühlturmanlagen dieses Wasser nicht direkt, sondern erst nach einer Vorbehandlung sinnvoll nutzen können. Durch die Vorbehandlung wird zumindest die Hauptmenge der schlecht löslichen Stoffe entweder aus dem Wasser entfernt oder in eine besser lösliche Form übergeführt. Typischerweise ist nach einer derartigen Vorbehandlung dann eine rund fünffache Eindickung möglich.

Seit vielen Jahren, spätestens seit der Veröffentlichung der US-PS Nr. 4 172 786 der NASA, ist bekannt, dass die Ozonung des Wassers von Kühlturm-Kühlanlagen eine weitergehende Eindickung erlaubt. Die unlöslich gewordenen Wasserinhaltsstoffe scheiden sich aus dauernd ozontem Wasser zur Hauptsache im Wasserkörper aus und setzen sich nicht mehr oder nur noch in geringem Mass an den Innenflächen des aquatischen Systems ab, wo sie insbesondere an den zu kühlenden Flächen haften und dort die wärmestauenden Beläge bilden. Rip G. Rice & J. Fred Wilkes haben den Stand dieser Technik kürzlich kritisch zusammengefasst (OS & E, Bd. 14, S. 329 bis 365, 1992: "Fundamental Aspects of Ozone Chemistry in Recirculating Cooling Water Systems"). Diese ökologisch wie ökonomisch vorteilhafte Technik hat einzig den Nachteil, dass die unlöslich gewordenen Wasserinhaltsstoffe sich irgendwo und in der Regel an verschiedenen Stellen innerhalb des Systems aus dem Wasser ausscheiden und teilweise ablagern (absetzen). Ihre Entfernung aus dem System wird dadurch schwierig oder gar unmöglich.

Über ein solches Verfahren wird auch in NASA Tech Brief, NTIS TECH NOTES 1990, Springfield, Seite 985, berichtet und ausgesagt, dass die Bakterienkonzentration verringert und Ablagerungen entfernt werden und dass sich im Becken Ausfällungen von Calciumionen und anderen Metallionen absetzen.

Sogenannte Seitenstromfilter, wie beispielsweise auch in der WO-A-91/12209 beschrieben, werden in einigen Kühlturmanlagen eingesetzt, um die aus dem Wasser ausgeschiedenen, aber nicht abgelagerten Schwebestoffe durch Filtration aus dem System zu entfernen.

Ziel der vorliegenden Erfindung ist, die Ausscheidung schwerlöslicher Stoffe aus ozonten, aquatischen Systemen zu erleichtern. Erreicht wird dieses Ziel durch die Bildung einer Senke an geeigneter Stelle im wasserführenden System in Form eines Bereiches, in welchem für die Ausfällung der unlöslich oder schwer löslich gewordenen Wasserinhaltsstoffe, das heisst, für die Ueberführung dieser Stoffe aus dem gelösten in den ungelösten Zustand, besonders vorteilhafte Bedingungen vorliegen. Erfindungsgemäss werden diese Bedingungen durch einen Fliessbettreaktor erfüllt, in dem die unlöslich gewordenen Stoffe Körner bilden, die kontinuierlich oder periodisch aus dem Reaktor und damit aus dem System entfernt werden.

Dazu geeignete Fliessbettreaktoren wurden als sogenannte Schnellreaktoren in den früher in der Wassertechnik häufig eingesetzten Schnellentcarbonisierungsanlagen verwendet. Mit diesen Anlagen kann aus sauberem Wasser die Hauptmenge der an Bicarbonat gebundenen Härtebildner (der sogenannten Carbonathärte oder der vorübergehenden Wasserhärte) wirtschaftlich und sehr umweltfreundlich entfernt werden. Im Reaktor bildet sich aus den unlöslich gewordenen Stoffen, deren Hauptbestandteil CaCO₃ ist, ein praktisch kugelförmiges Hartkorn mit Durchmessern bis zu einigen Millimetern und einem sehr geringen Wassergehalt in der Grössenordnung von nur einem Prozent. Das Korn kann aus dem Reaktor und damit aus dem System periodisch oder kontinuierlich abgelassen werden.

Das Verfahren der Schnellentcarbonisierung mit seinen Schnellreaktoren ist etwas in Vergessenheit geraten und wird nur noch selten neu installiert. Der Hauptgrund dafür liegt darin, dass Wasser immer mehr mit Stoffen, insbesondere organischen Stoffen, verunreinigt ist, die die Hartkornbildung im Schnellreaktor stören. Das Verfahren wird aber im Alpenraum mit seinem verhältnismässig sauberen Wasser in einigen Anlagen und beispielsweise auch durch die Wasserversorgung der Stadt Amsterdam noch betrieben.

Durch die dauernde Ozonung des Wassers in aquatischen Systemen der eingangs erwähnten Art werden Inhaltsstoffe des Wassers, die die kristalline Ausscheidung unlöslich gewordener Stoffe in Fliessbettreaktoren behindern, abgebaut. Fliessbettreaktoren, wie sie in Schnellentcarbonisierungsanlagen verwendet werden, bieten sich darum zur Entfernung der in diesen Systemen unlöslich gewordenen Wasserinhaltsstoffe an.

Das aus dem aquatischen System auf diese Weise entfernte Korn ist ein reines Naturprodukt, zusammengesetzt aus auschliesslich anorganischen Bestandteilen des dem aquatischen System zugesetzten Wassers. Dessen organische Bestandteile werden durch die dauernde Ozonung des Wassers im aquatischen System abgebaut. Das Korn kann dank seiner natürlichen Zusammensetzung mit Vorteil wieder in der Wasseraufbereitung, z.B. zur Filtration des Wassers und zur Einstellung des Kalk-Kohlensäure-Gleichgewichtes, eingesetzt werden. Durch diese Rezyklierung wird Abfall vermieden.

Aufgrund seiner grossen Reinheit ist das Korn aber auch leicht deponierbar. Im Vergleich zu Schlamm, wie er aus üblichen Reinigungsverfahren anfällt, mit denen das Zusatzwasser behandelt wird, um eine nur ca. fünffache Eindickung zu ermöglichen, ist das Korn reiner, insbesondere frei von nicht in natürlichem Wasser enthaltenen Zusatzstoffen, und hat einen Wassergehalt von nur rund einem Prozent statt 60 bis 80% und damit ein viel geringeres Abfallvolumen.

Die US-PS Nr. 5 114 576, angemeldet am 11. Oktober 1990 und erteilt am 19. Mai 1992, verfolgt dieselbe Zielsetzung und bietet eine ähnliche Lösung an. Es wird darin eine "chemical filtration unit" beansprucht, mit der gelöste Feststoffe konzentriert und aus dem System abgeführt werden. Der erfindungsgemässe Einsatz eines Fliessbettreaktors fällt aber nicht unter diesen Begriff, und alle in dieser US-PS gemachten Angaben zeigen, dass die Erfinder an Membranfiltrations-oder Membrantrennanlagen denken. Sie führen mehrere solcher Anlagen in den Beispielen an. Sie erwähnen ausserdem, dass die bekannten Biozide mit ihren Techniken der Entfernung gelöster Stoffe nicht kompatibel sind, beanspruchen 5 bis 10 µm-Filter und die Zugabe von Hilfsstoffen, mit denen ungelöste Stoffe dispergiert werden, um die Membran zu schützen. Alle diese Massnahmen müssen beim erfindungsgemässen Einsatz des Fliessbettreaktors nicht getroffen werden.

Die wichtigsten Merkmale zur Abgrenzung des erfindungsgemässen Verfahrens von demjenigen der US-PS 5 114 576 sind:
- Das erfindungsgemässe Verfahren ist nur auf ozonte Systeme anwendbar.
- Das Ozon muss vor dem Fliessbettreaktor nicht entfernt werden.
- Die "Abschlämmung" der Wasserinhaltsstoffe erfolgt als leicht zu entsorgender Feststoff mit einem Wasseranteil von nur ca. einem Prozent, wogegen nach der US-PS diese Stoffe in einer wässrigen Lösung anfallen, die, wie für Membrantrennanlagen üblich, höchstens eine rund 5%ige Konzentration aufweist. Dies bedeutet, dass zusammen mit den abzuführenden Feststoffen mindestens die rund 20-fache Wassermenge einschliesslich der zugesetzten dispergierenden Hilfsstoffe abgeleitet wird.
- Vor dem Fliessbettreaktor muss kein Filter, insbesondere kein 5 bis 10 µm-Filter, eingesetzt werden.
- Die Zugabe von dispergierenden Hilfsstoffen wäre beim erfindungsgemässen Verfahren sogar schädlich.

## Patentansprüche

1. Verfahren zur kontrollierten Abführung von unlöslichen und schwerlöslichen Stoffen aus einem teilweise zur Atmosphäre hin offenen System, in dem ozontes Wasser zirkuliert, dadurch gekennzeichnet, dass in diesem aquatischen System ein Bereich gebildet wird, innerhalb dessen für die Ausfällung dieser Stoffe günstigere Bedingungen vorliegen als ausserhalb dieses Bereichs, und dass der die Ausfällung begünstigende Bereich durch die Reaktionszone eines Fliessbettreaktors gebildet wird, aus dem die ausgefällten Stoffe ausgeschieden werden.

2. Verfahren nach Anspruch 1, dadurch gekennzeichnet, dass zur Reaktionszone im Fliessbettreaktor ein die Ausfällung fördernder Stoff, vorzugsweise ein Alkali und insbesondere gebrannter Kalk oder Kalkhydrat, zudosiert wird.

3. Verfahren nach Anspruch 1 oder 2, dadurch gekennzeichnet, dass zwecks weitergehender Entfernung von Fremdstoffen aus dem Wasser dem Fliessbettreaktor Vorrichtungen zur mechanischen Abtrennung von Feststoffen aus dem Wasser, z.B. eine oder mehrere Klärstufen, wie Lamellenabscheider oder Filter, nachgeschaltet werden.

4. Verfahren nach einem der Ansprüche 1 bis 3, dadurch gekennzeichnet, dass das aus dem Fliessbettreaktor abgeschiedene Hartkorn in einem Filter als Filtermaterial eingesetzt wird, um durchströmendes Wasser mechanisch zu filtrieren und/oder in das Kalk-Kohlensäure-Gleichgewicht zu bringen.

5. Verfahren nach einem der Ansprüche 1 bis 4, dadurch gekennzeichnet, dass zur Entsorgung des aus dem Fliessbettreaktor abgeschiedenen Hartkorns bzw. des als Filtermaterial eingesetztem Hartkorns in den Leerraum der Hartkornschüttung andere Abfallstoffe eingelagert werden.

## Claims

1. A process for the controlled removal of insoluble and slightly soluble substances from a system which is partially open to the atmosphere and in which ozonized water circulates, wherein a region within which the conditions are more favorable for precipitation of these substances than outside this region is formed in this aquatic system, and wherein the region promoting precipitation is formed by the reaction zone of a fluidized-bed reactor, from which the precipitated substances are removed.

2. A process as claimed in claim 1, wherein a precipitation-promoting substance, preferably an alkali and in particular calcium oxide or hydroxide, is metered into the reaction zone in the fluidized-bed reactor.

3. A process as claimed in claim 1 or 2, wherein, for further removal of foreign substances from the water, apparatuses for the mechanical separation of solids from the water, for example one or more clarification stages, such as laminar separators or filters, are present downstream of the fluidized-bed reactor.

4. A process as claimed in any of claims 1 to 3, wherein the hard particle removed from the fluidized-bed reactor is used as filter material in a filter in order mechanically to filter water flowing therethrough and/or to bring said water to the lime/carbonic acid equilibrium.

5. A process as claimed in any of claims 1 to 4, wherein other wastes are incorporated in the empty space of the bed of hard particles in order to dispose of the hard particle removed from the fluidized-bed reactor or of the hard particle used as filter material.

## Revendications

1. Procédé d'évacuation dirigée de substances insolubles ou peu solubles à partir d'un système partiellement ouvert sur l'atmosphère et dans lequel circule de l'eau ozonée, caractérisé en ce que, dans ce système aquatique, il est formé un domaine au sein duquel il règne des conditions plus favorables à la précipitation desdites substances qu'elles ne le sont à l'extérieur de ce domaine, et que le domaine qui favorise la précipitation est formé par la zone de réaction d'un réacteur à lit fluide à partir duquel les substances précipitées sont éliminées.

2. Procédé selon la revendication 1, caractérisé en ce que l'on ajoute à la zone de réaction du réacteur à lit fluide une substance qui favorise la précipitation, de préférence, un alcali et notamment de la chaux vive ou de la chaux éteinte.

3. Procédé selon la revendication 1 ou 2, caractérisé en ce que, pour réaliser une élimination plus poussée des corps étrangers à partir de l'eau, on installe en aval du réacteur à lit fluide des dispositifs pour la séparation mécanique de substances solides à partir de l'eau, par exemple, un ou plusieurs échelons d'épuration tels qu'un séparateur à lamelles ou un filtre.

4. Procédé selon l'une quelconque des revendications 1 à 3, caractérisé en ce que l'on utilise dans un filtre, comme matériel de filtration, les grains durs retirés du réacteur à lit fluide, pour filtrer mécaniquement l'eau qui passe à travers et/ou l'introduire dans l'équilibre chaux/acide carbonique.

5. Procédé selon l'une quelconque des revendications 1 à 4, caractérisé en ce que l'on place d'autres résidus dans l'espace libre de la couche de grains durs, afin d'évacuer les grains durs retirés du réacteur à lit fluide ou les grains durs utilisés comme matériel de filtration.
